# EUROPÄISCHE PATENTANMELDUNG

(11) **EP 1 593 591 A1**
(43) Veröffentlichungstag der Anmeldung: **09.11.2005**
(21) Anmeldenummer: 04010775.7
(22) Anmeldetag: 06.05.2004
(51) Int. Cl.: B62K 25/28

(54) **Fahrrad mit Hinterradschwinge**

(71) Anmelder: Canyon Bicycles GmbH, 56073 Koblenz (DE)
(72) Erfinder: Scheffer, Lutz, 75181 Pforzheim (DE)
(74) Vertreter: von Kirschbaum, Albrecht

(57) **Zusammenfassung**

Ein Fahrrad, insbesondere ein Mountainbike, weist einen Fahrradrahmen mit einem Sattelrohr (10) auf. Mit dem Sattelrohr (10) ist eine Hinterradschwinge (20) verbunden. Die Hinterradschwinge (20) weist ein oberes, von einer Nabenaufnahme (28) in Richtung des Sattelrohrs (10) verlaufendes Schwingenelement (24) auf. Das obere Schwingenelement (24) ist über einen Führungshebel (32) gelenkig mit dem Sattelrohr (10) verbunden. Erfindungsgemäß ist ein Dämpfungselement (42) vorgesehen, das gelenkig mit der Hinterradschwinge (20) und dem Sattelrohr (10) verbunden ist, wobei das Dämpfungselement erfindungsgemäß innerhalb des Felgenkreises (54) des Hinterrads (26) angeordnet ist.

## Beschreibung

Die Erfindung betrifft ein Fahrrad, insbesondere ein Mountainbike, mit einer Hinterradschwinge, die mit einem Dämpfungselement verbunden ist.

Die Hinterradschwinge ist insbesondere bei Mountain- oder Trekkingbikes nicht starr, sondern schwingend mit dem Fahrradrahmen verbunden. Hierbei ist ein unteres Schwingenelement üblicherweise im Bereich des Tretlagers über ein Gelenk mit dem Sattelrohr verbunden. Ferner dient das untere Schwingenelement an seinem freien Ende zur Nabenaufnahme des Hinterrads bzw. ist mit einer entsprechenden Nabenaufnahme verbunden. Ferner ist mit der Nabenaufnahme ein oberes Schwingenelement verbunden, das in Richtung des Sattelrohrs verläuft, jedoch mit diesem nicht starr oder fest verbunden ist.

Zum Dämpfen der Hinterradschwinge ist es beispielsweise bekannt, das obere freie Ende des oberen Schwingenelements über ein Dämpfungselement mit dem Oberrohr des Rahmens zu verbinden. Diese Konstruktion ist jedoch aufwändig, da ein entsprechender Hebel bzw. ein Verbindungselement, das das obere Schwingenelement mit dem Dämpfungselement verbindet, am Sattelrohr vorbeigeführt werden muss. Derartige Verbindungselemente sind beispielsweise gabelförmig ausgebildet, so dass jeweils ein Gabelteil seitlich am Sattelrohr vorbeigeführt ist. Derartige Fahrradrahmen mit Hinterradschwingen-Dämpfer sind aus DE 298 11 484 und DE 202 05 539 bekannt.

Eine weitere Anordnungsmöglichkeit des Dämpfungselements ist in EP 1 238 900 beschrieben. Hierin erfolgt die Anordnung des Dämpfungselements seitlich neben dem Hinterrad. Hierbei ist die Kolbenstange, d.h. das dünnere Ende des Dämpfers, im Bereich der Nabenaufnahme mit dem unteren Schwingenelement verbunden. Das gegenüberliegende Kolbenende, d.h. das dicke Ende des Dämpfungselements, ist mit einer Seite eines Hebels verbunden. Die andere Seite des Hebels ist mit dem oberen Ende des oberen Schwingenelements verbunden. Der Hebel selbst ist mit dem Sattelrohr gelenkig verbunden, wobei auf einer Seite des Gelenks das obere Schwingenelement, und auf der anderen Seite des Gelenks das Kolbenende des Dämpfungselements mit dem Hebel verbunden ist. Beim Einfedern des Hinterrads, d.h. beim Bewegen der Hinterradschwinge nach oben, werden somit an beiden Enden des Dämpfungselements Druckkräfte auf das Dämpfungselement ausgeübt. Da das Dämpfungselement im Wesentlichen seitlich neben dem Hinterradmantel und der Hinterradfelge angeordnet ist, muss das Dämpfungselement möglichst dünn ausgebildet sein, um zu vermeiden, dass die Ferse des Fahrers beim Treten gegen das Dämpfungselement stößt. Dies hat zur Folge, dass es sich bei den eingesetzten Dämpfungselementen um Sonderanfertigungen handeln, wodurch die Herstellungskosten des Fahrrads erheblich steigen. Ferner ist die Ausgestaltung des Hebels, auf den sowohl die Kräfte des oberen Schwingenelements als auch die Kräfte des Dämpfungselements wirken, kompliziert. Insbesondere handelt es sich um ein äußerst massives und damit schweres Bauteil.

Aufgabe der Erfindung ist es, ein Fahrrad mit Hinterradschwinge mit verbesserter Anordnung des Dämpfungselements zu schaffen.

Die Lösung der Aufgabe erfolgt erfindungsgemäß durch die Merkmale des Anspruchs 1.

Das erfindungsgemäße Fahrrad, bei dem es sich insbesondere um ein Mountain-oder Trekkingbike handelt, weist ein Fahrradrahmen mit einem Sattelrohr auf. Mit dem Sattelrohr ist insbesondere im Bereich des Tretlagers ein unteres Schwingenelement einer Hinterradschwinge verbunden. Das untere Schwingenelement weist an seinem hinteren Ende eine Nabenaufnahme auf bzw. ist mit einer entsprechenden Nabenaufnahme verbunden. Mit dieser Nabenaufnahme ist ferner ein oberes, in Richtung des Sattelrohrs verlaufendes Schwingenelement verbunden. Das obere Schwingenelement ist erfindungsgemäß über einen Führungshebel gelenkig mit dem Sattelrohr verbunden. Ferner ist seitlich neben dem Hinterrad ein Dämpfungselement angeordnet.

Um die Anordnung des Dämpfungselements zu verbessern ist das Dämpfungselement erfindungsgemäß stets innerhalb des Felgenkreises des Hinterrads angeordnet. Das Dämpfungselement, d.h. der Kolben und das Dämpfergehäuse des Dämpfungselements, sind innerhalb des Felgenkreises angeordnet. In diesem Bereich ist seitlich mehr Bauraum vorhanden, da das Dämpfungselement bis in die Nähe der Speichen ragen kann und der seitliche Bauraum nicht durch den Mantel begrenzt ist, der insbesondere bei Mountainbikes sehr breit ist. Im Bereich der Felge und insbesondere des Fahrradmantels ist das Dämpfungselement erfindungsgemäß nicht vorgesehen. In diesem Bereich ist vorzugsweise lediglich ein stabförmiges Zwischenelement vorgesehen, durch das das Dämpfungselement mit dem Sattelrohr gelenkig verbunden ist. Ggf. kann es sich in diesem Bereich auch um eine entsprechend dünn ausgebildete Kolbenstange des Dämpfungselements handeln. Erfindungswesentlich ist, dass der Kolben und das Dämpfergehäuse des Dämpfungselements innerhalb des Felgenkreises, d.h. seitlich neben den Speichen, angeordnet ist. Es ist somit erfindungsgemäß möglich, ein relativ dickes Dämpfergehäuse vorzusehen. Ein derartiges Dämpfungselement mit relativ großem Durchmesser kann neben der Felge bzw. dem Hinterradmantel nicht vorgesehen werden, da es hier beim Treten stören würde. Insbesondere würde die Ferse des Radfahrers gegen das Dämpfungselement stoßen.

Vorzugsweise befindet sich das Dämpfungselement daher in ein- und ausgefedertem Zustand innerhalb des Felgenkreises. Hierbei ist die Anordnung des Dämpfungselementes in Seitenansicht bzw. in Seitenprojektion zu verstehen. In Längsrichtung gesehen befindet sich das Dämpfungselement seitlich versetzt zu dem Felgenkreis.

Vorzugsweise handelt es sich bei dem erfindungsgemäß eingesetzten Dämpfungselement um einen kurzhubigen Dämpfer, dessen Hub vorzugsweise kleiner als 50 mm und besonders bevorzugt kleiner als 40 mm ist. Das Vorsehen eines derartig kurzhubigen Dämpfungselements ist nur möglich, wenn ein Kolben mit großer Querschnittsfläche vorgesehen sein kann, d.h. ein entsprechender Bauraum vorhanden ist. Dies ist bei der erfindungsgemäßen Anordnung des Dämpfungselements möglich. Ein weiterer Vorteil der erfindungsgemäßen Anordnung des Dämpfungselements besteht darin, dass keine Sonderanfertigung, sondern ein Standard-Dämpfungselement eingesetzt werden kann.

Die Verbindung des Dämpfungselements oder des mit dem Dämpfungselement verbundenen, stabförmigen Zwischenelements am Sattelrohr erfolgt vorzugsweise in einem Abstand zu der Verbindung des Führungshebels mit dem Sattelrohr. Insbesondere ist das Dämpfungselement bzw. das Zwischenelement nicht mit dem Führungshebel, sondern unmittelbar mit dem Sattelrohr verbunden. Die Verbindung mit dem Sattelrohr erfolgt vorzugsweise unterhalb der Verbindung des Führungshebels.

Da es auf Grund der erfindungsgemäßen Anordnung des Dämpfungselements möglich ist, ein kurzhubiges Dämpfungselement vorzusehen, ist es ferner möglich, den Verbindungspunkt zwischen dem Dämpfungselement bzw. Zwischenelement und dem Sattelrohr relativ tief anzuordnen. Dies bedeutet, dass es erfindungsgemäß möglich ist, den Verbindungspunkt zwischen Dämpfungselement bzw. Zwischenelement und Sattelrohr gegenüber bekannten, seitlich neben dem Hinterrad angeordneten Dämpfungselementen näher am Tretlager vorzusehen. Dies hat den weiteren Vorteil, dass die Verbindung zwischen dem Führungshebel und dem Sattelrohr ebenfalls weiter in Richtung des Tretlagers nach unten versetzt werden kann. Hierdurch ist es möglich, einen relativ kurzen Führungshebel vorzusehen. Dies wiederum hat den Vorteil, dass der Hebel trotz der erforderlichen Steifigkeit ein relativ geringes Gewicht aufweist. Vorzugsweise ist der Führungshebel bei uneingefedertem Hinterrad, d.h. bei stehendem, unbelastetem Fahrrad, im Wesentlichen horizontal angeordnet.

Besonders bevorzugt ist es, das Dämpfungselement derart anzuordnen, dass die Kolbenstange des Dämpfungselements mit der Hinterradschwinge, insbesondere im Bereich der Nabenaufnahme, verbunden ist. Das Kolbengehäuse, d.h. die dickere Seite des Dämpfungselements, ist somit in der Nähe des Felgenkreises bzw. in Richtung des Sattelrohrs weisend, angeordnet. Dies hat den Vorteil, dass die Verstellelemente des Dämpfers, die üblicherweise im Bereich des Kolbengehäuses vorgesehen sind, auch während der Fahrt leicht zugänglich sind.

Besonders bevorzugt ist es, die Kolbenstange des Dämpfungselements im Wesentlichen zwischen den beiden Schwingenelementen anzuordnen. Besonders bevorzugt ist es hierbei, die Kolbenstange nahe des oberen Schwingenelements anzuordnen. Dies hat den Vorteil, dass das obere Schwingenelement gleichzeitig als Spritzschutz dient, so dass die Dichtung des Dämpfungselement, die die Kolbenstange umgibt, geschont wird, da weniger Schmutz auf die Kolbenstange gelangt und von dem Dichtungselement abgestriffen werden muss. Insbesondere ist somit ein Rohr des oberen Schwingungselements, ein Rohr des unteren Schwingungselements und die Kolbenstange in einer Ebene angeordnet.

Besonders bevorzugt ist es, nur auf einer Seite des Hinterrads ein Dämpfungselement vorzusehen. Es ist jedoch prinzipiell auch möglich, auf beiden Seiten des Hinterrads Dämpfungselemente vorzusehen, wobei sodann ein Dämpfungselement als Zugstufe und ein Dämpfungselement als Druckstufe ausgebildet sein kann.

Da erfindungsgemäß vorzugsweise ein kurzhubiges Dämpfungselement verwendet wird, ist das Verhältnis des Einfederwegs des Hinterrads zu dem Hub des Dämpfungselements vorzugsweise größer als 2. Insbesondere ist dieses Verhältnis größer als 2,1, besonders bevorzugt größer als 2,3 und insbesondere größer als 2,5.

Nachfolgend wird die Erfindung anhand einer bevorzugten Ausführungsform unter Bezugnahme auf die anliegenden Zeichnungen näher erläutert.

### Es zeigen:

- Fig. 1: eine schematische Seitenansicht einer Hinterradschwinge in nicht eingefedertem Zustand,
- Fig. 2: eine schematische Seitenansicht einer Hinterradschwinge in eingefedertem Zustand,
- Fig. 3: eine schematische Teilansicht der Hinterradschwinge von oben in Richtung des Pfeils III in Fig. 1 und
- Fig. 4: eine schematische Schnittansicht entlang der Linie IV-IV in Fig. 1.

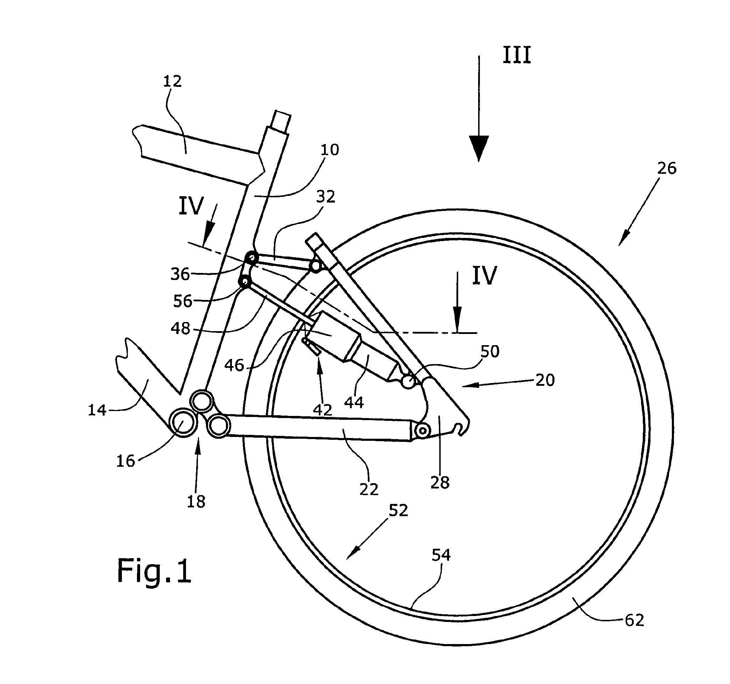

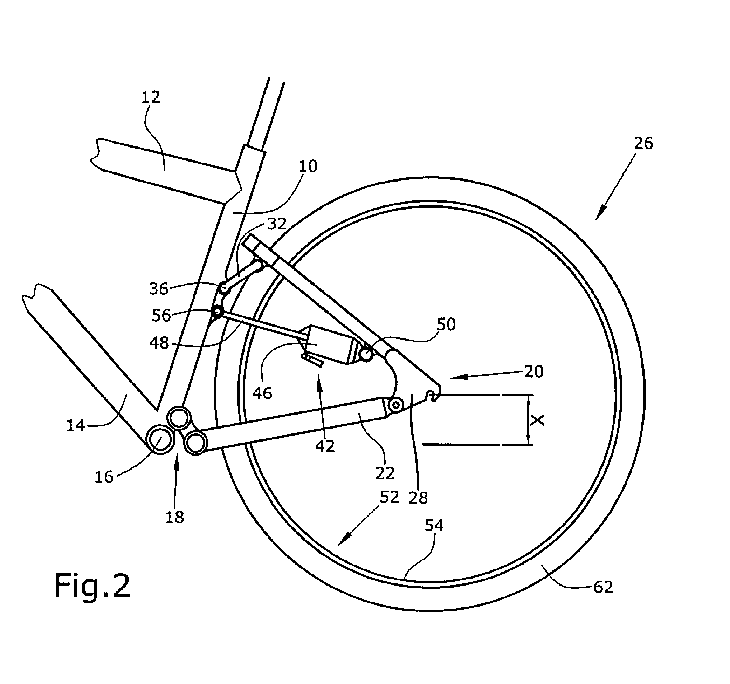

Ein Fign. 1 und 2 nur teilweise dargestellter Fahrradrahmen weist ein Sattelrohr 10 auf. Das Sattelrohr 10, in das an einem oberen Ende die Sattelstange eingeführt wird, ist mit einem Oberrohr 12 und einem Unterrohr 14 verbunden. Im Bereich der Verbindung zwischen dem Sattelrohr 10 und dem Unterrohr 14 ist ein Tretlager 16 vorgesehen. Oberhalb des Tretlagers 16 ist im dargestellten Ausführungsbeispiel mit dem Sattelrohr 10 ein Schwingenlager 18 verbunden.

Mit dem Schwingenlager 18 ist eine Hinterradschwinge 20 verbunden, wobei die Hinterradschwinge 20 ein unteres Schwingenelement 22 und ein oberes Schwingenelement 24 aufweist. Die beiden Schwingenelemente 22, 24 weisen jeweils rohrförmige Elemente auf, die auf jeweils einer Seite des Hinterrads 26 angeordnet sind. Das untere Schwingenelement 22 ist mit dem Schwingenlager 18 und einer Nabenaufnahme 28, die zur Aufnahme der Nabe des Hinterrads 26 dient, verbunden. Das obere Schwingenelement 24 ist ebenfalls mit der Nabenaufnahme 28 verbunden und verläuft in Richtung des Sattelrohrs 10, ist mit diesem jedoch nicht starr verbunden.

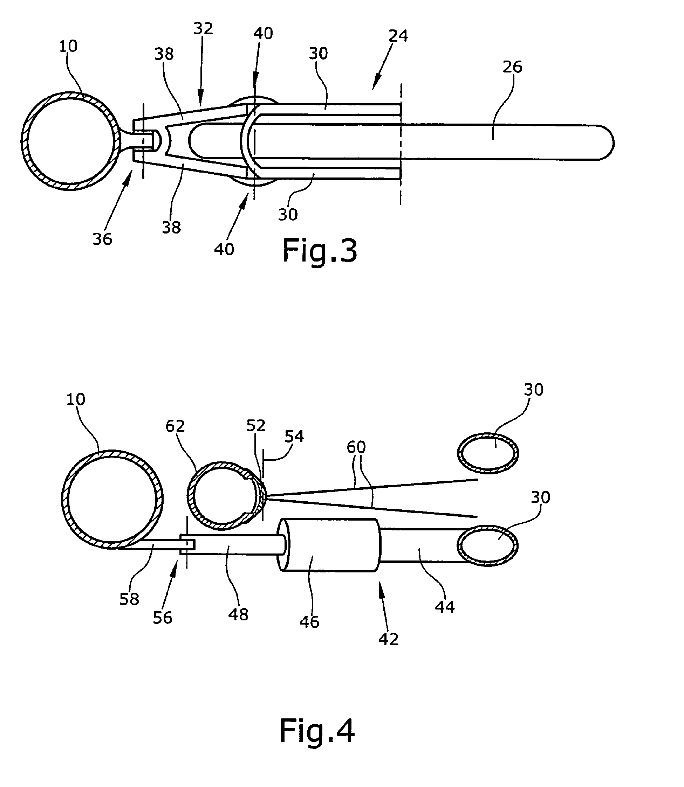

Die Verbindung des oberen Schwingenelements 24, das ein linkes und rechtes Schwingenteil 30 (Fig. 3) aufweist, ist über einen Führungshebel 32 mit dem Sattelrohr 10 verbunden. Die beiden Schwingenteile 30 sind über eine Brücke 34, die oberhalb des Hinterrads 26 verläuft, miteinander verbunden. Der Führungshebel 32 ist über ein Gelenk 36 (Fig. 3) mit dem Sattelrohr verbunden. Zwei Stegteile 38 des Führungshebels 32 sind über Gelenke 40 jeweils mit den Schwingenteilen 30 des oberen Schwingenelements 24 gelenkig verbunden.

Das Dämpfungselement 42 weist eine Kolbenstange 44 und ein Kolbengehäuse 46 auf. Mit dem Kolbengehäuse 46 ist im dargestellten Ausführungsbeispiel ein stabförmiges Zwischenelement 48 verbunden. Erfindungsgemäß ist die Kolbenstange 44 des Dämpfungselements 42 über ein Gelenk 50 im Bereich der Nabenaufnahme 28 mit der Hinterradschwinge 20 verbunden. Im dargestellten Ausführungsbeispiel erfolgt die gelenkige Verbindung mit dem oberen Schwingenelement 24. Das einen relativ großen Umfang aufweisende Dämpfergehäuse 46 ist erfindungsgemäß innerhalb des durch die Felge 52 gebildeten Felgenkreises 54 angeordnet. Dies gilt sowohl in nicht eingefedertem Zustand (Fig. 1) als auch in eingefedertem Zustand (Fig. 2).

Das stabförmige Zwischenelement 48 ist über ein Gelenk 56 mit dem Sattelrohr 10 verbunden. Das Gelenk 56 ist im dargestellten Ausführungsbeispiel in einem Abstand gegenüber dem Gelenk 36 mit dem Sattelrohr 10 verbunden. Auf Grund der getrennten Verbindung des Dämpfungselements 42 bzw. des Führungshebels 32 mit dem Sattelrohr 10 werden die Kräfte an unterschiedlichen Punkten in das Sattelrohr 10 eingeleitet und können daher besser aufgenommen werden.

Zur Verbindung des Zwischenelements 48 mit dem Sattelrohr 10 ist an dem Sattelrohr 10 ein Ansatz bzw. eine Lasche 58 (Fig. 4) vorgesehen.

Wie aus Fig. 4 deutlich ersichtlich, ist das einen relativ großen Durchmesser aufweisende Dämpfergehäuse innerhalb des in Fig. 4 als gestrichelte Linie dargestellten Felgenkreises 54, d.h. seitlich neben Speichen 60, angeordnet. Hierbei ist der Felgenkreis 54 durch die Felge 52 gebildet. Das besondere, auf Höhe des in der Felge 52 gehaltenen Mantels 62 ist erfindungsgemäß nur das relativ dünne, stabförmige Zwischenelement 48 angeordnet. Das Dämpfungselement 42 ist somit in einem Bereich neben den Speichen 60 angeordnet, in dem ein dickeres Dämpfungselement angeordnet sein kann. Dies hat den Vorteil, dass ein kurzhubiges Dämpfungselement verwendet werden kann, bei welchem eine relativ große Kolbenfläche erforderlich ist, um die auftretenden Kräfte aufnehmen zu können.

Das Verhältnis des Einfederwegs x (Fig. 2) des Hinterrads 26 besteht zum Hub des Dämpfungselements 42 der im Vergleich in den in Fign. 1 und 2 dargestellten Lagen des Dämpfungselements ersichtlich ist, erfindungsgemäß größer als 2, insbesondere größer als 2,1.

## Patentansprüche

1. Fahrrad, insbesondere Mountainbike, mit
einem Fahrradrahmen mit einem Sattelrohr (10),
einer mit dem Fahrradrahmen gelenkig verbundenen Hinterradschwinge (20) mit einem mit einer Nabenaufnahme (28) verbundenen unteren Schwingenelement (22) und einem von der Nabenaufnahme (28) in Richtung des Sattelrohrs (10) verlaufenden oberen Schwingenelement (24),
einem das obere Schwingenelement (24) mit dem Sattelrohr (10) gelenkig verbindenden Führungshebel (32) und
einem seitlich neben einem Hinterrad (26) angeordneten Dämpfungselement (42),
**dadurch gekennzeichnet, dass**
das Dämpfungselement (42) stets innerhalb des Felgenkreises (54) des Hinterrads (26) angeordnet ist.

2. Fahrrad nach Anspruch 1, **dadurch gekennzeichnet, dass** das Dämpfungselement im Bereich der Nabenaufnahme (28) gelenkig mit der Hinterradschwinge (20) verbunden ist.

3. Fahrrad nach Anspruch 1 oder 2, **dadurch gekennzeichnet, dass** das Dämpfungselement (42) vorzugsweise über ein stabförmiges Zwischenelement (48) gelenkig mit dem Sattelrohr (10) verbunden ist.

4. Fahrrad nach Anspruch 3, **dadurch gekennzeichnet, dass** die Verbindung des Dämpfungselements (42) mit dem Sattelrohr (10) in einem Abstand zur Verbindung des Führungshebels (32) mit dem Sattelrohr (10) vorgesehen ist.

5. Fahrrad nach einem der Ansprüche 1 - 4, **dadurch gekennzeichnet, dass** eine Kolbenstange (44) des Dämpfungselements (42) im Bereich der Nabenaufnahme (28) mit der Hinterradschwinge verbunden ist.

6. Fahrrad nach einem der Ansprüche 1 - 5, **dadurch gekennzeichnet, dass** die Kolbenstange (44) im Wesentlichen oberhalb des unteren Schwingenelements (22) und/ oder unterhalb des oberen Schwingenelements (24) angeordnet ist.

7. Fahrrad nach einem der Ansprüche 1 - 6, **dadurch gekennzeichnet, dass** das Dämpfungselement (42) ein Kurz-Hub-Dämpfer ist, dessen Hub vorzugsweise kleiner als 50 mm und besonders bevorzugt kleiner als 40 mm ist.

8. Fahrrad nach einem der Ansprüche 1-7, **dadurch gekennzeichnet, dass** das Verhältnis von Einfederweg (x) des Hinterrades (26) zum Hub des Dämpfungselements (42) größer 2, insbesondere größer 2,5 ist.

9. Fahrrad nach einem der Ansprüche 1 - 8, **dadurch gekennzeichnet, dass** der Führungshebel (32) bei uneingefedertem Hinterrad im Wesentlichen horizontal angeordnet ist.
